# EUROPÄISCHE PATENTSCHRIFT

(11) **EP 2 939 891 B1**
(45) Veröffentlichungstag und Bekanntmachung des Hinweises auf die Patenterteilung: **04.11.2020**
(21) Anmeldenummer: 15000275.6
(22) Anmeldetag: 29.01.2015
(51) Int. Cl.: B60T 13/66, B60T 13/68, B60T 17/08

(54) **Elektrische Feststellbremse**
Electric parking brake
Frein de stationnement électrique

(30) Priorität: 30.04.2014 DE 102014006314
(43) Veröffentlichungstag der Anmeldung: 04.11.2015
(73) Patentinhaber: MAN Truck & Bus SE, 80995 München (DE)
(72) Erfinder: Azahaf, Hicham, 81541 München (DE); Hofstetter, Thomas, 84048 Mainburg (DE); Heim, Volker, 81241 München (DE)
(74) Vertreter: v. Bezold & Partner Patentanwälte - PartG mbB

(56) Entgegenhaltungen:
- DE-A1- 10 251 249
- DE-A1-102005 060 225

## Beschreibung

Die Erfindung betrifft eine elektrische Feststellbremsvorrichtung gemäß dem Oberbegriff der Ansprüche 1 und 14. Eine solche Feststellbremsvorrichtung ist aus DE 102005060225 A1 bekannt. Die Erfindung betrifft ferner ein Fahrzeug mit einer solchen Feststellbremsvorrichtung.

Nutzfahrzeugbremsanlagen umfassen ein Betriebsbremssystem und ein Parkbremssystem, die zumeist unabhängig voneinander pneumatisch oder elektropneumatisch gesteuert werden. Parkbremssysteme, nachfolgend auch als Feststellbremssysteme bezeichnet, umfassen zumeist Federspeicherbremszylinder, die in ihrem entlüfteten Zustand das Fahrzeug bremsen, während die Parkbremse durch Belüften des Federspeicherbremszylinders gelöst werden kann.

Nutzfahrzeuge können ferner mit einem Not-Aus-Trennschalter ausgestattet sein. Der Not-Aus-Trennschalter ist typischerweise muskelkraftbetätigt und im Fahrerhaus angeordnet. Mit einem derartigen Not-Aus-Trennschalter können jegliche Spannungsversorger, z. B. eine oder mehrere Batterien und Generatoren, z. B. im Gefahrenfall, vom angeschlossenen Bordnetz abgetrennt werden. Hierbei tritt das Problem auf, dass nach Betätigung des Not-Aus-Trennschalters oder auch allgemein bei Ausfall der Stromversorgung das Betätigen einer elektrischen Feststellbremse nicht mehr bzw. nur innerhalb einer kurzen Latenzzeit möglich ist.

Aufgrund gesetzlicher Anforderungen muss der Fahrer das Fahrzeug jedoch mittels der Feststellbremse gegen Wegrollen sichern können und sicher abstellen können. Aus diesem Grunde könnte somit in Betracht gezogen werden, das Einlegen der Feststellbremse unmittelbar an die Betätigung des Not-Aus-Trennschalters zu koppeln. Es ist jedoch aus der Praxis bekannt, dass der Not-Aus-Trennschalter in Notsituationen auch während der Fahrt bzw. beim Ausrollen des Fahrzeugs betätigt wird. Aus diesem Grunde stellt ein direktes vollständiges Einlegen der Feststellbremse unmittelbar mit der Betätigung des Not-Aus-Trennschalters ein Sicherheitsrisiko dar, insbesondere weil in diesem Falle dann eine Vollbremsung mit der Feststellbremse ohne Blockierverhinderer erfolgen würde.

Es ist somit eine Aufgabe der Erfindung, eine elektrische Feststellbremse bereitzustellen, mit der Nachteile herkömmlicher elektrischer Feststellbremsen vermieden werden können. Der Erfindung liegt insbesondere die Aufgabe zugrunde, eine elektrische Feststellbremse derart weiterzubilden, dass das Nutzfahrzeug bzw. die Zugkombination auch nach Betätigung des Not-Aus-Trennschalters sicher abgestellt bzw. sicher im Stillstand gehalten werden kann.

Diese Aufgaben werden durch eine elektrische Feststellbremsvorrichtung gemäß den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die erfindungsgemäße elektrische Feststellbremse eines Fahrzeugs weist in Übereinstimmung mit dem Stand der Technik eine Aktoreinrichtung auf, die ausgebildet ist, mechanische Bauteile einer Radbremseinrichtung zu betätigen, insbesondere um die mechanischen Bauteile in Eingriff und/oder außer Eingriff zu bringen. Die elektrische Feststellbremse umfasst ferner eine Steuereinrichtung, die die Aktoreinrichtung elektrisch ansteuert.

Gemäß allgemeinen Gesichtspunkten der Erfindung ist die Steuereinrichtung eingerichtet, zu erfassen, ob ein Not-Aus-Trennschalter betätigt wurde, und falls der Not-Aus-Trennschalter betätigt wurde, innerhalb einer Latenzzeit nach Betätigung des Not-Aus-Trennschalters, während der die Aktoreinrichtung noch elektrisch ansteuerbar ist, eine Teilbremsung einzuleiten, derart, dass sich eine volle Bremswirkung der elektrischen Feststellbremse verzögert einstellt. Um zu erfassen, dass der Not-Aus-Trennschalter betätigt wurde, ist die Steuereinrichtung unmittelbar oder mittelbar mit dem Not-Aus-Trennschalter über elektrische Leitungen verbunden. Der Not-Aus-Trennschalter ist vorzugsweise ein muskelkraftbetätigbares Bedienelement, typischerweise im Fahrerhaus eines Nutzfahrzeugs angeordnet, über den jegliche Spannungsversorger, z. B. Batterie und Generatoren, von Bordnetz getrennt werden können. Der Not-Aus-Trennschalters kann beispielsweise mit einem Batterietrennschalter, der als elektronischer Schalter ausgeführt sein kann, über elektrische Leitungen verbunden sein, derart, dass nach Betätigung des Not-Aus-Trennschalters durch den Fahrer der Batterietrennschalter nach der Latenzzeit geschaltet wird.

Die Erfindung umfasst also die allgemeine technische Lehre, unmittelbar nach Betätigung des Not-Aus-Trennschalters eine Teilbremsung einzuleiten, welche im zeitlichen Verlauf bis zum vollständigen Einlegen der Feststellbremse zunimmt. Dadurch kann verhindert werden, dass bei Betätigung des Not-Aus-Trennschalters bei fahrendem Fahrzeug eine die Sicherheit gefährdende Vollbremsung ohne Blockierverhinderer ausgelöst wird. Hierbei wird ferner die Latenzzeit ausgenutzt, die typischerweise in Bereich von wenigen Sekunden, z. B. ca. zwei Sekunden, liegt und innerhalb derer nach Betätigung des Not-Aus-Trennschalters noch eine elektrische Ansteuerung der Aktoreinrichtung möglich ist.

Gemäß dem vorgenannten Aspekt kann die Aktoreinrichtung somit ausgebildet sein, beim Einleiten der Teilbremsung die mechanischen Bauteile der Radbremse schrittweise in Eingriff zu bringen, so dass die Bremswirkung im Zeitverlauf zunehmend bzw. die volle Bremswirkung verzögert eingestellt wird.

Die Erfindung ist hinsichtlich des konstruktiven Aufbaus der Feststellbremsvorrichtung nicht auf einen bestimmten Aufbau beschränkt. Gemäß einer besonders bevorzugten Ausführungsform ist die Feststellbremse pneumatisch ausgeführt. Hierbei kann die Aktoreinrichtung der elektrischen Feststellbremsvorrichtung wenigstens einen Federspeicherbremszylinder und eine elektropneumatisch steuerbare Feststellbremsventilanordnung umfassen, wobei der wenigstens eine Federspeicherbremszylinder über eine Versorgungsleitung und die Feststellbremsventilanordnung mit einer Druckmittelquelle verbindbar ist. Ferner ist die Feststellbremsventilanordnung im gelösten Zustand der Feststellbremsvorrichtung mit Druck der Druckmittelquelle über die Feststellbremsventilanordnung beaufschlagt und im eingelegten Zustand der Feststellbremsvorrichtung über die Feststellbremsventilanordnung mit einer Drucksenke verbindbar. Die Drucksenke kann durch eine Verbindung mit der Umgebungsluft gebildet sein.

Gemäß dieser Ausführungsform ist die Feststellbremsventilanordnung dazu ausgelegt, zum Einleiten der Teilbremsung den wenigstens einen Federspeicherbremszylinder so mit der Drucksenke zu verbinden, dass sich der Druck des Druckmittels im Federspeicherbremszylinder verzögert abbaut.

Ferner kann die elektropneumatisch steuerbare Feststellbremsventilanordnung dazu ausgelegt sein, in einer ersten Betriebsart den wenigstens einen Federspeicherbremszylinder so mit der Drucksenke zu verbinden, dass sich der Druck des Druckmittels im Federspeicherbremszylinder unverzögert abbaut, und in einer zweiten Betriebsart den wenigstens einen Federspeicherbremszylinder so mit der Drucksenke zu verbinden, dass sich der Druck des Druckmittels im Federspeicherbremszylinder verzögert abbaut. Gemäß dieser Variante ist die Steuereinrichtung eingerichtet, die Feststellbremsventilanordnung zum Einlegen des eingelegten Zustands des wenigstens einen Federspeicherbremszylinders in der ersten Betriebsart anzusteuern, falls der Not-Aus-Trennschalter nicht betätigt wurde, und in der zweiten Betriebsart anzusteuern, falls der Not-Aus-Trennschalter betätigt wurde.

Der Druck des Druckmittels im Federspeicherbremszylinder kann verzögert abgebaut werden, indem die Feststellbremsventilanordnung so ausgeführt ist, dass das Druckmittel aus dem wenigstens einen Federspeicherbremszylinder beim Einleiten der Teilbremsung bzw. in der zweiten Betriebsart gedrosselt entweichen kann.

Beispielsweise kann die Ventileinrichtung hierzu ein Drosselventil umfassen, mittels dessen zum Einleiten der Teilbremsung der Luftdruck im Federspeicherbremszylinder gesenkt wird.

Zur Ausbildung der ersten Betriebsart kann eine herkömmliche elektropneumatisch ansteuerbare Feststellbremsventilanordnung einer Feststellbremse verwendet werden. Eine derartige Feststellbremsventilanordnung kann in an sich bekannter Weise ein Relaisventil mit einem Steuereingang, einem Arbeitseingang, einem mit dem wenigstens einen Federspeicherbremszylinder verbundenen Arbeitsausgang und einem Entlüftungsausgang umfassen.

Das Relaisventil ist über seinen pneumatischen Steuereingang mittels weiterer Ventile der Feststellbremsventilanordnung, von denen mindestens eines von der Steuereinrichtung elektrisch ansteuerbar ist, zum Belüften und Entlüften des wenigstens einen Federspeicherbremszylinders ansteuerbar.

Zum Entlüften des wenigstens einen Federspeicherbremszylinders ist das Relaisventil über seinen pneumatischen Steuereingang in eine Entlüftungsstellung bringbar, in der der Arbeitsausgang mit dem Entlüftungsausgang verbunden ist, wodurch die Entlüftung des wenigstens einen Federspeicherbremszylinders unverzögert eingeleitet wird. Der Begriff "unverzögert" wird in dieser Anmeldung so verstanden, dass kein gezielter Verzögerungs- oder Drosselmechanismus vorgesehen ist, um den wenigstens einen Federspeicherbremszylinder zu entlüften bzw. um allgemein die mechanischen Bauteile einer Radbremseinrichtung in Eingriff zu bringen. Die Entlüftung des wenigstens einen Federspeicherbremszylinders hängt somit nur von der üblichen Reaktionszeit der Ventilanordnung ab.

Derartige elektropneumatisch steuerbare Ventilanordnungen zur Ausbildung der vorgenannten unverzögerten Entlüftung des wenigstens einen Federspeicherbremszylinders sind an sich aus dem Stand der Technik bekannt und müssen hier nicht weiter beschrieben werden.

Gemäß einer bevorzugten Ausgestaltungsform bildet die vorliegende Erfindung eine derartige elektropneumatisch steuerbare Feststellbremsventilanordnung zur Realisierung der zweiten Betriebsart dahingehend weiter, dass ferner ein Drosselventil vorgesehen ist, das ausgangsseitig mit der Drucksenke, beispielsweise mit der Umgebungsluft, verbunden ist und eingangsseitig über ein von der Steuereinrichtung elektrisch schaltbares Steuerventil mit dem wenigstens einen Federspeicherbremszylinder verbindbar ist. Hierbei ist das Steuerventil bei nicht betätigtem Not-Aus-Trennschalter bzw. in der ersten Betriebsart geschlossen und bei betätigtem Not-Aus-Trennschalter bzw. in der zweiten Betriebsart auf Durchlass geschaltet.

Gemäß dieser Ausgestaltungsform kann das Entlüften des wenigstens einen Federspeicherbremszylinders bei nicht betätigtem Not-Aus-Trennschalter bzw. in der ersten Betriebsart über das Relaisventil in der Entlüftungsstellung und bei betätigtem Not-Aus-Trennschalter bzw. in der zweiten Betriebsart über das Steuerventil und das Drosselventil erfolgen.

Ein besonderer Vorzug dieser Ausgestaltungsform liegt somit darin, dass durch die beschriebene Erweiterung einer herkömmlichen elektropneumatischen Ventilanordnung um zusätzliche Abzweigung des Federspeicher-Belüftungszulaufs, enthaltend das schaltbare Steuerventil und das Drosselventil, auf konstruktiv einfach Weise ein zweiter Entlüftungsmechanismus bereitgestellt werden kann, um eine gedrosselte Entlüftung bzw. die zweite Betriebsart zu realisieren. Ein weiterer Vorteil ist, dass mit diesem Ansatz auch Nutzfahrzeuge mit einer herkömmlichen elektrischen Feststellbremse nachträglich mit vergleichsweise geringem konstruktivem Aufwand zur Realisierung der zweiten Betriebsart nachrüstbar sind.

Bei einer vorteilhaften Variante dieser Ausgestaltungsform ist das Steuerventil ein 2/2-Wegeventil. Das 2/2-Wegeventil kann beispielsweise als ein bistabiles magnetisches 2/2-Wegeventil oder als ein magnetisches 2/2-Wegeventil mit Federrückstellung und pneumatischem Selbsthalteeffekt ausgeführt sein.

Gemäß einer weiteren Ausführungsalternative umfasst die Feststellbremsventilanordnung ein 3/2-Wegeventil, aufweisend einen ersten Anschluss, der über ein Drosselventil mit der Drucksenke verbunden ist, einen zweiten Anschluss, der mit einer Ventilanordnung der Feststellbremsventilanordnung zum Entlüften und Belüften des wenigstens einen Federspeicherbremszylinders verbunden ist, und einen dritten Anschluss, der mit dem wenigstens einen Federspeicherbremszylinder verbunden ist. Gemäß dieser Variante ist das 3/2-Wegeventil bei nicht betätigtem Not-Aus-Trennschalter in einer Durchlassstellung, in der der zweite und der dritte Anschluss verbunden sind. In dieser Stellung erfolgt die Belüftung und Entlüftung des wenigstens einen Federspeicherbremszylinders in herkömmlicher Weise über die herkömmliche elektropneumatische Ventilanordnung. Erfasst die Steuereinrichtung ein Einlegen des Not-Aus-Trennschalters, schaltet die Steuereinheit das 3/2-Wegevenil in eine Durchlassstellung, in der der erste und der dritte Anschluss verbunden sind. In dieser Stellung wird der wenigstens eine Federspeicherbremszylinder über das Drosselventil gedrosselt entlüftet.

Gemäß einer bevorzugten alternativen Ausgestaltungsform kann eine herkömmliche bekannte elektropneumatisch steuerbare Ventilanordnung zur Entlüftung und Belüftung des wenigstens einen Federspeicherbremszylinders so weitergebildet werden, dass das Entlüften des wenigstens einen Federspeicherbremszylinders sowohl bei nicht betätigtem Not-Aus-Trennschalter bzw. in der ersten Betriebsart als auch bei betätigtem Not-Aus-Trennschalter bzw. in der zweiten Betriebsart über das herkömmliche Relaisventil erfolgen kann.

Gemäß dieser alternativen Ausgestaltungsform kann die Feststellbremsventilanordnung ein Drosselventil umfassen, das eingangsseitig mit einer Eingangsdruckluftleitung verbunden ist, die im belüfteten Zustand des wenigstens einen Federspeicherbremszylinders belüftet ist, und das ausgangsseitig über ein elektrisch schaltbares Steuerventil und eine Ausgangsdruckluftleitung mit dem Steuereingang des Relaisventils mittelbar oder unmittelbar pneumatisch koppelbar ist.

Eine mittelbare Koppelung der Ausgangsdruckluftleitung mit dem Steuereingang des Relaisventil kann beispielsweise realisiert werden, in dem über den in der Ausgangsdruckluftleitung anliegenden Druck ein weiteres Steuerventil pneumatisch betätigt wird, das den am Steuereingang des Relaisventils anliegenden Druck steuert.

Mit anderen Worten wird die Feststellbremsventilanordnung um eine zusätzliche Abzweigung von einer Leitung, die bei belüftetem Federspeicher auch belüftet ist, erweitert, enthaltend das Drosselventil und das Steuerventil.

Gemäß dieser Variante ist das Steuerventil bei nicht betätigtem Not-Aus-Trennschalter bzw. in der ersten Betriebsart so geschaltet, dass es die Eingangsdruckluftleitung sperrt. Bei betätigtem Not-Aus-Trennschalter bzw. in der zweiten Betriebsart wird das Steuerventil von der Steuereinrichtung auf Durchlass geschaltet. Ist das Steuerventil somit bei betätigtem Not-Aus-Trennschalter auf Durchlass geschaltet, ist die Ausgangsdruckluftleitung mit dem Steuereingang des Relaisventils mittelbar oder unmittelbar pneumatisch gekoppelt. Aufgrund des Drosselventils baut sich der pneumatische Kopplungsdruck verzögert auf, derart, dass sich die Entlüftungsstellung des Relaisventils verzögert einstellt und sich der Luftdruck in dem wenigstens einen Federspeicherbremszylinder verzögert abbaut.

Ein besonderer Vorzug der Erfindung dieser Ausgestaltungsform liegt somit darin, dass durch die beschriebene Erweiterung einer herkömmlichen elektropneumatischen Ventilanordnung um eine zusätzliche gedrosselte pneumatische Steuerung des Relaisventils auf konstruktiv einfache und baulich kompakte Weise ein zweiter Entlüftungsmechanismus zur Realisierung der gedrosselten Entlüftung bzw. der zweiten Betriebsart bereitgestellt werden kann.

Bei einer vorteilhaften Variante dieser alternativen Ausgestaltungsform ist das Steuerventil ein elektromagnetisch betätigbares 3/2-Wegeventil, das in der Sperrschaltung, in der die Eingangsdruckluftleitung gesperrt ist, die Ausgangsdruckluftleitung mit einem Entlüftungsausgang des 3/2-Wegeventils verbindet und in der Durchlassschaltung die Eingangsdruckluftleitung über das Drosselventil mit der Ausgangsdruckluftleitung verbindet. Diese Variante bietet den Vorteil, dass ein störender Druckaufbau in der Ausgangsdruckluftleitung, wenn die Eingangsdruckluftleitung durch das Steuerventil gesperrt ist, vermieden wird.

Das 3/2-Wegeventil der alternativen Ausgestaltungsform kann ein bistabiles 3/2-Wegeventil oder ein 3/2-Wegeventil mit Federrückstellung und pneumatischem Selbsthalteeffekt sein.

Gemäß einem weiteren Aspekt der Erfindung kann die Stärke der Drosselung, vorzugsweise eine Stärke der Drosselung des Drosselventils, einstellbar sein. Dadurch kann die Bremswirkung bei der Teilbremsung optimal auf den Fahrzeugtyp oder den Beladungszustand sowie die Achslastverteilung eingestellt werden.

Eine Möglichkeit der erfindungsgemäßen Realisierung sieht ferner vor, dass die Steuereinrichtung eingerichtet ist, zu ermitteln, ob eine Fahrgeschwindigkeit des Fahrzeugs kleiner als ein vorbestimmter Schwellwert ist; und, falls die ermittelte Fahrgeschwindigkeit kleiner als der Schwellwert ist, bei Betätigung des Not-Aus-Trennschalters eine Vollbremsung statt einer Teilbremsung über die Aktoreinrichtung einzuleiten. Ferner kann die Steuereinrichtung eingerichtet sein, falls bereits eine Teilbremsung eingeleitet wurde, die Aktoreinrichtung so anzusteuern, dass diese die mechanischen Teile der Radbremseinrichtung unverzögert mit der vollen Bremskraft beaufschlagt.

Beispielsweise kann, falls die bestimmte Fahrgeschwindigkeit kleiner als der vorbestimmte Schwellwert ist, die Steuereinrichtung eingerichtet sein, eine maximale Entlüftung des wenigstens einen Federspeicherbremszylinders einzuleiten.

Diese Variante bietet den Vorteil, dass die Teilbremsung nur ab einer vorgegebenen Fahrgeschwindigkeit eingeleitet wird und nicht bei stehendem oder einem sich langsam bewegenden Fahrzeug, wo ein unverzögertes Einlegen der Parkbremse kein Risiko darstellt.

Ein weiterer Aspekt der Erfindung betrifft ein Nutzfahrzeug mit einer elektrischen Feststellbremsvorrichtung nach einem der vorhergehenden Aspekte.

Weitere Einzelheiten und Vorteile der Erfindung werden im Folgenden unter Bezug auf die beigefügten Zeichnungen beschrieben. Es zeigen:
- Figur 1: eine elektrische Feststellbremsvorrichtung gemäß einem ersten Ausführungsbeispiel;
- Figur 2: eine elektrische Feststellbremsvorrichtung gemäß einem zweiten Ausführungsbeispiel;
- Figur 3: eine elektrische Feststellbremsvorrichtung gemäß einem dritten Ausführungsbeispiel;
- Figur 4: eine elektrische Feststellbremsvorrichtung gemäß einem vierten Ausführungsbeispiel; und
- Figur 5: eine elektrische Feststellbremsvorrichtung gemäß einem fünften Ausführungsbeispiel.

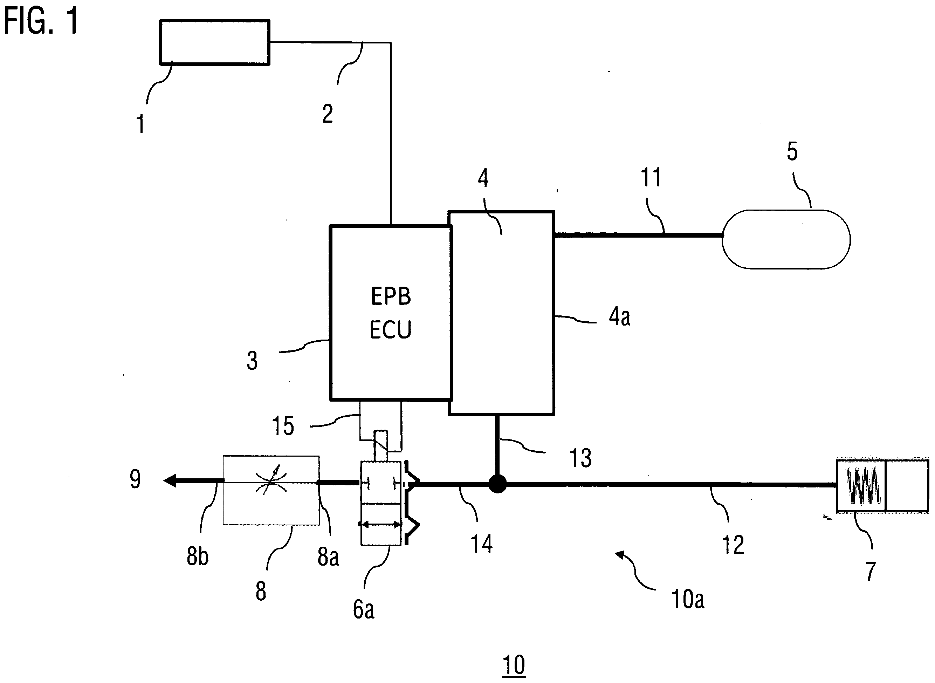

Zunächst wird anhand von Figur 1 schematisch mit einem Blockschaltbild ein erstes Ausführungsbeispiel 10 der elektrischen Feststellbremsanlage erläutert. Die Feststellbremsanlage 10 steuert die Feststellbremse über einen Druckmittelkreis.

Der in der Figur 1 dargestellte Teil des Druckmittelkreises umfasst einen Druckmittelvorratsbehälter 5, der über eine Versorgungsleitung 11 pneumatisch mit einer herkömmlichen elektropneumatisch steuerbaren Ventilanordnung 4 verbunden ist.

Der Druckmittelkreis umfasst weitere in Figur 1 links vom Druckmittelvorratsbehälter 5 angeordnete Komponenten, wie beispielsweise ein Vierkreisschutzventil, einen Kompressor, einen Druckregler, etc., die in herkömmlicher Weise ausgeführt sind und zur Vereinfachung der Darstellung in Figur 1 nicht dargestellt sind.

Die elektropneumatisch steuerbare Ventileinrichtung 4 ist über Druckluftleitungen 12, 13 mit wenigstens einem Federspeicherbremszylinder 7 verbunden. Der Federspeicherbremszylinder 7 weist eine Federkammer mit einer Feder auf sowie eine Druckkammer, die über die Druckluftleitungen 12, 13 mit Druck beaufschlagt oder aber entlüftet werden kann. Die Federspeicherbremszylinder 7 zusammen mit der nachfolgend beschriebenen Ventilanordnung 10a dienen als Aktoreinrichtung, um mechanische Bauteile einer Radbremseinrichtung eines Rades (nicht dargestellt) zu betätigen, insbesondere um die mechanischen Bauteile in Eingriff (Federspeicherbremszylinder entlüftet) und/oder außer Eingriff (Federspeicherbremszylinder belüftet) zu bringen.

Die elektropneumatisch steuerbare Ventilanordnung 4 wird von einer Steuereinrichtung 3 zum Einlegen und Lösen der Feststellbremse elektrisch angesteuert. Hierzu ist die Steuereinrichtung über elektrische Leitungen (nicht dargestellt) mit einer im Inneren des Fahrerhauses angeordneten Parkbremsbedieneinheit (nicht gezeigt) verbunden.

Die zur elektropneumatischen Steuerung der Belüftung bzw. Entlüftung der Federspeicherbremszylinder 7 eingesetzte elektropneumatisch steuerbare Ventilanordnung 4 und die Steuereinrichtung 3 sind an sich aus dem Stand der Technik bekannt und müssen deshalb nicht näher beschrieben werden. Die elektropneumatisch steuerbare Ventilanordnung 4 ist insbesondere hinsichtlich des konstruktiven Aufbaus bzw. der konkreten Ausgestaltung der Ventilanordnung nicht auf einen bestimmten Aufbau beschränkt. An dieser Stelle ist lediglich zu erwähnen, dass die Ventileinrichtung 4 ausgeführt ist, im gelösten Zustand der Feststellbremsvorrichtung die Druckluftleitungen 12, 13 mit Druck des Druckluftvorrats 5 zu beaufschlagen und zum Einlegen der Feststellbremsvorrichtung die Druckluftleitungen 12, 13 zu entlüften. Hierzu werden entsprechende Ventile der Ventilanordnung 4 von der Steuerung 3 elektropneumatisch angesteuert.

Derartige Ventileinrichtungen 4 können als bauliche Einheit realisiert sein, die von einem Gehäuse 4a umhaust ist, an dem Anschlüsse vorgesehen sind, um die elektrischen und pneumatischen Leitungen an der Ventileinrichtung 4 anzuschließen.

Zur Vereinfachung der Darstellung ist die konkrete Ventilanordnung im Innern der Ventileinrichtung 4, die in üblicher Weise ausgeführt ist, nicht dargestellt. Hierbei ist lediglich festzustellen, dass die Ventilanordnung im Innern der Ventileinrichtung 4 üblicherweise ein Relaisventil (nicht dargestellt) umfasst, das von einem Relais-Steuerventil, das pneumatisch mit dem Steuereingang des Relaisventils gekoppelt ist, in eine Durchlassstellung (Feststellbremse im nicht eingelegten Zustand) und in eine Entlüftungsstellung (Feststellbremse im eingelegten Zustand) schaltbar ist, wobei in der Entlüftungsstellung eine Arbeitskammer des internen Relaisventils, die über die Druckluftleitungen 12, 13 mit dem Federspeicherbremszylinder 7 verbunden ist, über einen Entlüftungsausgang zur Umgebung hin entlüftet wird, wodurch auch der Federspeicherbremszylinder 7 in herkömmlicher Weise unverzögert entlüftet wird, was nachfolgend auch als erste Betriebsart bezeichnet wird.

Figur 1 zeigt ferner einen im Inneren des Fahrerhauses (nicht dargestellt) angeordneten Not-Aus-Trennschalter 1, der über Leitungen 2 oder den CAN elektrisch mit der Steuereinheit 3 der elektropneumatischen Ventileinrichtung 4 verbunden ist.

Gemäß dem in Figur 1 gezeigten Ausführungsbeispiel wird die herkömmliche bekannte Ventilanordnung 4 mittels zusätzlicher Komponenten zu einer Feststellbremsventilanordnung 10a erweitert, so dass eine zweite Betriebsart der Feststellbremse ermöglicht wird, gemäß der eine Teilbremsung durch gedrosseltes Entlüften des wenigstens einen Federspeicherbremszylinders 7 ermöglicht wird.

Hierzu umfasst die Feststellbremsventilanordnung 10a neben der Ventileinrichtung 4 ferner ein Drosselventil 8, das ausgangsseitig 8b mit der Drucksenke, hier der Umgebungsluft 9, verbunden ist und eingangsseitig 8a über ein von der Steuereinrichtung 3 elektrisch schaltbares Steuerventil 6a mit dem wenigstens einen Federspeicherbremszylinder 7 pneumatisch verbindbar ist. Das Steuerventil 6a ist als bistabiles magnetisches 2/2-Wegeventil ausgeführt und über elektrische Leitungen 15 von der Steuereinrichtung 3 ansteuerbar.

Nachfolgend wird beispielhaft die erste und zweite Betriebsart zur Entlüftung der elektrischen Feststellbremsvorrichtung 10 beschrieben.

Die Steuereinrichtung 3 ist eingerichtet, zu erfassen, ob ein Not-Aus-Trennschalter 1 betätigt wurde. Bei Betätigung des Not-Aus-Trennschalters 1 wird ein entsprechendes Signal über die Leitungen 2 an die Steuereinrichtung 3 übermittelt.

Falls der Not-Aus-Trennschalter 1 nicht betätigt wurde, leitet die Steuereinrichtung 3 gemäß der ersten Betriebsart in üblicher Weise das Einlegen der Feststellbremse über die Ventilanordnung 4 ein, falls die im Innern des Fahrerhauses angeordnete Parkbremsbedieneinheit (nicht gezeigt) betätigt wird. Die Steuereinheit 3 der Ventileinrichtung 10a ist hierbei so ausgeführt, dass diese durch Ansteuerung der herkömmlichen Ventilanordnung 4 die Druckluftleitung 12, 13 entlüftet. Die Entlüftung erfolgt hierbei, wie vorstehend bereits erwähnt, über ein internes Relaisventil (nicht dargestellt) der Ventileinrichtung 4, das die Druckluft beim Entlüften über einen Entlüftungsausgang des internen Relaisventils an die Umgebung abgibt.

Hierbei ist das 2/2-Wegeventil 6a in der in Figur 1 gezeigten Sperrstellung.

Falls der Not-Aus-Trennschalter 1 betätigt wurde, wird die Stromversorgung des Bordnetzes nach einer Latenzzeit von z. B. 2 Sekunden unterbrochen. Gemäß der zweiten Betriebsart ist die Steuereinrichtung 3 eingerichtet, innerhalb der Latenzzeit nach Betätigung des Not-Aus-Trennschalters 1, während der die Ventilanordnung 10a noch elektrisch ansteuerbar ist, eine Teilbremsung einzuleiten, bei der sich eine volle Bremswirkung der elektrischen Feststellbremse verzögert einstellt. Gemäß der zweiten Betriebsart wird die Entlüftung des wenigstens einen Federspeicherbremszylinders 7 hierzu nicht über die Ventilanordnung 4, sondern über das Steuerventil 6a und das Drosselventil 8 eingeleitet. Nach Betätigung des Not-Aus-Trennschalters 1 schaltet die Steuereinrichtung 3 das 2/2-Wegeventil 6a innerhalb der Latenzzeit in die Durchlassstellung. In der Durchlassstellung ist die Druckkammer des wenigstens einen Federspeicherbremszylinders 7 über die Leitungen 12, 14 mit dem Drosselventil 8 verbunden. Aufgrund der Drosselwirkung des Drosselventils 8 erfolgt die Entlüftung des wenigstens einen Federspeicherbremszylinders 7 in die Umgebung 9 gedrosselt, und somit stellt sich die volle Bremswirkung im Vergleich zur ersten Betriebsart verzögert ein.

Die elektrische Feststellbremsvorrichtung 10 kann somit in einer ersten Betriebsart betrieben werden, in der der wenigstens eine Federspeicherbremszylinder 7 über die Ventilanordnung 4 so mit der Drucksenke verbunden wird, dass sich der Druck des Druckmittels im Federspeicherbremszylinder im Wesentlichen unverzögert abbaut. Die elektrische Feststellbremsvorrichtung 10 kann ferner in einer zweiten Betriebsart betrieben werden, in der der wenigstens eine Federspeicherbremszylinder 7 über die Ventilanordnung 6a, 8 so mit der Drucksenke verbunden wird, dass sich der Druck des Druckmittels im Federspeicherbremszylinder 7 im Vergleich zu ersten Betriebsart verzögert abbaut.

Die Steuereinrichtung 3 ist, wie vorstehend beschrieben, eingerichtet, die Feststellbremsventilanordnung 10a zum Einlegen des eingelegten Zustands des wenigstens einen Federspeicherbremszylinders 7 in der ersten Betriebsart anzusteuern, falls der Not-Aus-Trennschalter 1 nicht betätigt wurde, und in der zweiten Betriebsart anzusteuern, falls der Not-Aus-Trennschalter 1 betätigt wurde.

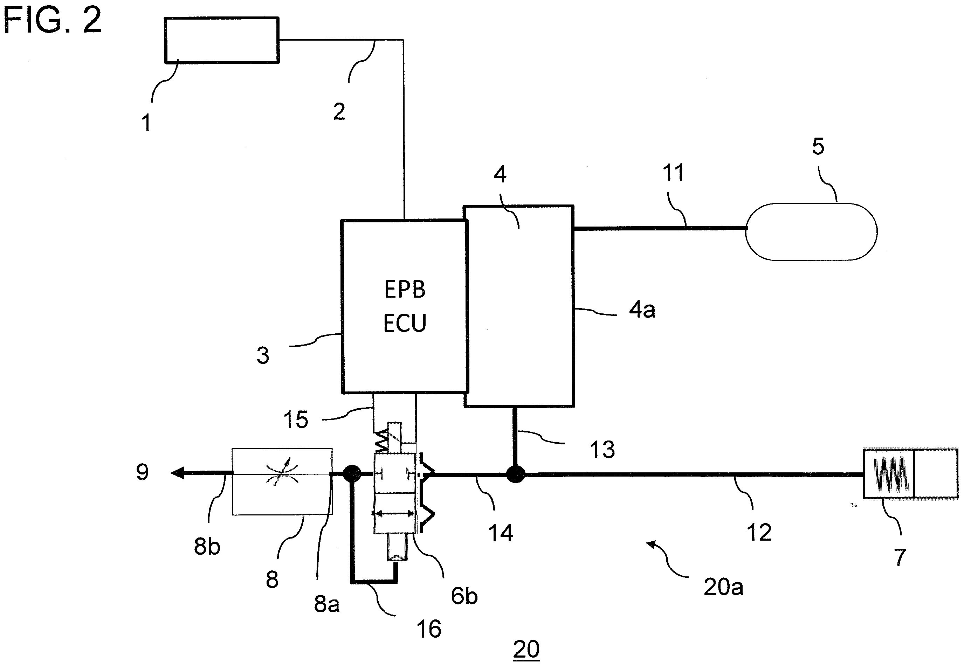

Figur 2 illustriert schematisch mit einem Blockschaltbild ein zweites Ausführungsbeispiel 20 der vorliegenden Erfindung. Hierbei entsprechen Komponenten mit gleichen Bezugszeichen den Komponenten der Figur 1 und werden nicht gesondert beschrieben.

Die Besonderheit dieses Ausführungsbeispiels im Vergleich zu dem zuvor beschriebenen Ausführungsbeispiel liegt darin, dass anstatt des in Figur 1 dargestellten magnetischen bi-stabilen 2/2-Wegeventils 6a ein magnetisches 2/2-Wegeventil 6b mit Federrückstellung und pneumatischem Selbsthalteeffekt ist. Der Luftdruck zur Ausübung einer Rückhaltekraft auf die Feder wird mittels der Druckluftleitung 16 aufgebaut. Bis auf die unterschiedliche Ausgestaltung des 2/2-Wegenventils 6b entspricht die Ausgestaltung der Ventilanordnung 20a der Ventilanordnung 10a der Figur 1. Insbesondere entspricht die Funktionsweise in der ersten und zweiten Betriebsart derjenigen des in Figur 1 beschriebenen Ausführungsbeispiels.

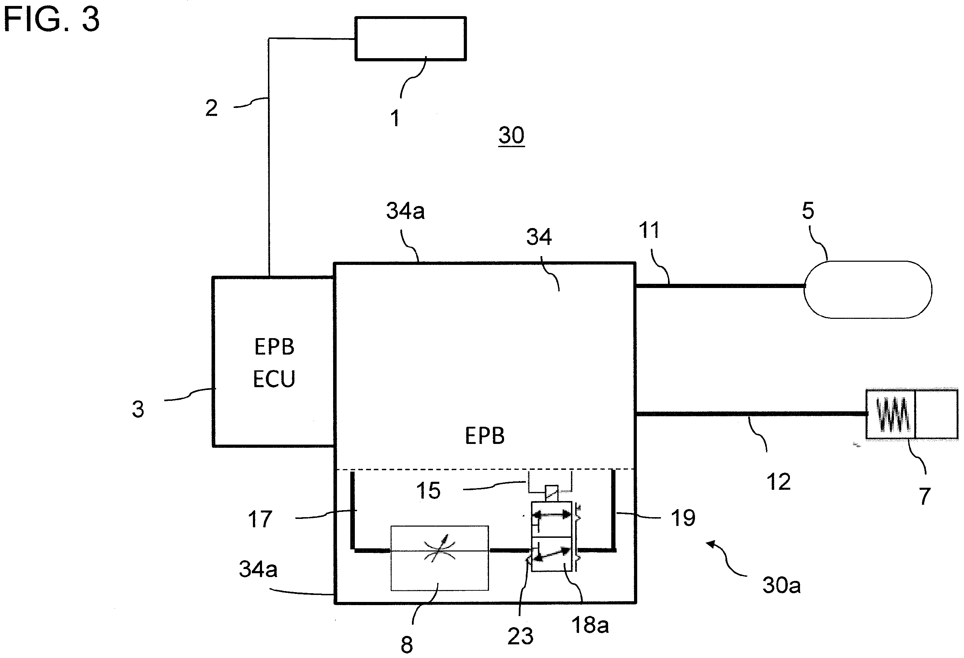

Figur 3 illustriert schematisch mit einem Blockschaltbild ein drittes Ausführungsbeispiel 30 der vorliegenden Erfindung. Hierbei entsprechen Komponenten mit gleichen Bezugszeichen den Komponenten der Figur 1 und werden nicht gesondert beschrieben.

Das Bezugszeichen 34 bezeichnet wiederum eine an sich bekannte elektropneumatisch steuerbare Ventilanordnung zur Belüftung bzw. Entlüftung des wenigstens einen Federspeicherbremszylinders 7.

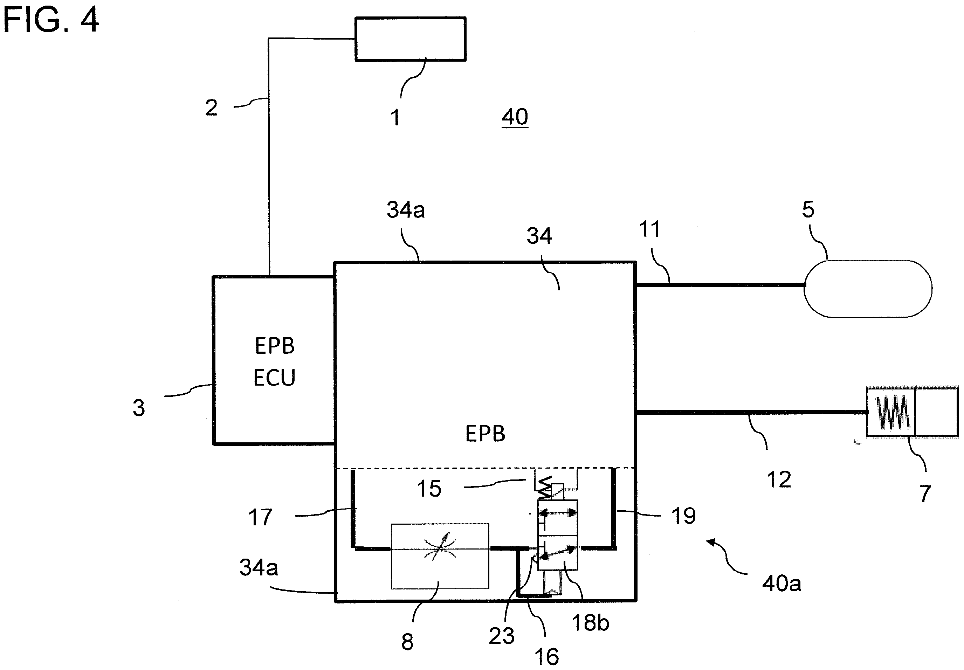

Die elektropneumatisch steuerbare Ventilanordnung 34 ist insbesondere hinsichtlich des konstruktiven Aufbaus bzw. der konkreten Ausgestaltung der Ventilanordnung nicht auf einen bestimmten Aufbau beschränkt, der in üblicher Weise ausgeführt ist und deshalb nicht näher dargestellt ist. In Figur 4 ist lediglich die Erweiterung der herkömmlichen Ventilanordnung 34 gezeigt, die durch die Komponenten unterhalb der gestrichelten Linien dargestellt sind.

An dieser Stelle ist wiederum lediglich zu erwähnen, dass die Ventileinrichtung 34 ausgeführt ist, im gelösten Zustand der Feststellbremsvorrichtung die Druckluftleitungen 12, 13 mit Druck des Druckluftvorrats 5 zu beaufschlagen und zum Einlegen der Feststellbremsvorrichtung die Druckluftleitungen 12, 13 zu entlüften. Hierzu werden entsprechende Ventile der Ventilanordnung 34 von der Steuerung 3 elektrisch angesteuert.

Ferner ist wiederum anzumerken, dass die Ventileinrichtung 34 ein Relaisventil (nicht dargestellt) umfasst. Das Relaisventil ist von einem Steuerventil zur Steuerung des Relaisventils, welches pneumatisch mit dem Steuereingang des Relaisventils gekoppelt ist, in eine Durchlassstellung (Feststellbremse im nicht eingelegten Zustand) und in eine Entlüftungsstellung (Feststellbremse im eingelegten Zustand) schaltbar. Dieses Steuerventil zur Steuerung des Relaisventils wird in dieser Beschreibung auch als Relais-Steuerventil bezeichnet und kann beispielsweise als pneumatisch betätigbares 3/2-Wegeventil ausgebildet sein.

In der Entlüftungsstellung wird eine Arbeitskammer des internen Relaisventils, die über die Druckluftleitungen 12, 13 mit dem Federspeicherbremszylinder 7 verbunden ist, über einen Entlüftungsausgang zur Umgebung hin entlüftet, wodurch auch der Federspeicherbremszylinder 7 in herkömmlicher Weise unverzögert entlüftet wird, was nachfolgend auch als erste Betriebsart bezeichnet wird.

Die Ventilanordnung 34 unterscheidet sich von den bekannten Ventilanordnungen, z. B. der Ventilanordnung 4, lediglich dadurch, dass das Relais-Steuerventil (nicht dargestellt), über welches das interne Relaisventil der Ventilanordnung gesteuert wird, gemäß dem Ausführungsbeispiel 30 zusätzlich gemäß einer zweiten Betriebsart über ein Drosselventil pneumatisch betätigbar ist, was nachfolgend erläutert ist.

Hierzu sieht die Feststellbremsventilanordnung 30a ein Drosselventil 8 vor, das eingangsseitig mit einer Eingangsdruckluftleitung 17 verbunden ist, die im belüfteten Zustand des wenigstens einen Federspeicherbremszylinders 7 belüftet ist, und das ausgangsseitig über ein elektrisch schaltbares Steuerventil 18a mit einer Ausgangsdruckluftleitung 19 verbindbar ist.

Das Steuerventil 18a ist als ein magnetisches bistabiles 3/2-Wegeventil ausgeführt, das über elektrische Leitungen 15 von der Steuereinrichtung 3 ansteuerbar ist.

Die Ausgangsdruckluftleitung ist mit dem pneumatisch betätigbaren Relais-Steuerventil (nicht gezeigt) pneumatisch verbunden, derart, dass die Ausgangsdruckluftleitung im belüfteten Zustand das Relais-Steuerventil pneumatisch in eine Stellung schaltet, in der das Relais-Steuerventil pneumatisch aktiviert wird und das Relaisventil in eine Entlüftungsstellung schaltet. Über das Relais-Steuerventil (z. B. ein weiteres 3/2-Wegeventil) ist die Ausgangsdruckluftleitung somit mit dem Relaisventil, über das der wenigstens eine Federspeicherbremszylinder 7 entlüftet wird, mittelbar pneumatisch koppelbar.

Gemäß dieser Ausführungsvariante wird die Feststellbremsventilanordnung 34 somit um eine zusätzliche Abzweigung 17 von einer Leitung, die bei belüftetem Federspeicher auch belüftet ist, erweitert, in der das Drosselventil 8 und das Steuerventil 18a angeordnet sind.

Nachfolgend wird beispielhaft die erste und zweite Betriebsart zur Entlüftung der elektrischen Feststellbremsvorrichtung 30 beschrieben.

Die Steuereinrichtung 3 ist wiederum eingerichtet, zu erfassen, ob ein Not-Aus-Trennschalter 1 betätigt wurde. Bei Betätigung des Not-Aus-Trennschalters 1 wird ein entsprechendes Signal über die Leitungen 2 an die Steuereinrichtung 3 übermittelt.

Falls der Not-Aus-Trennschalter 1 nicht betätigt wurde, leitet die Steuereinrichtung 3 gemäß der ersten Betriebsart in üblicher Weise das Einlegen der Feststellbremse über die Ventilanordnung 34 ein, falls die im Innern des Fahrerhauses angeordnete Parkbremsbedieneinheit (nicht gezeigt) betätigt wird. Die Steuereinheit 3 der Ventileinrichtung 30a ist hierbei so ausgeführt, dass diese durch Ansteuerung der herkömmlichen Ventilanordnung 34 die Druckluftleitung 12, 13 entlüftet. Die Entlüftung erfolgt hierbei, wie vorstehend bereits erwähnt, über ein unverzögertes Ansteuern des internen Relaisventils (nicht dargestellt) der Ventileinrichtung 34, das die Druckluft aus der Druckluftleitung 22 beim Entlüften über einen Entlüftungsausgang des internen Relaisventils an die Umgebung abgibt.

Hierbei ist das 3/2-Wegeventil 18a in der in Figur 3 gezeigten Entlüftungsstellung, in der die Eingangsdruckluftleitung 17 gesperrt ist und die Ausgangsdruckluftleitung über den Entlüftungsausgang 23 des 3/2-Wegeventils 18a entlüftet ist.

Falls der Not-Aus-Trennschalter 1 betätigt wurde, ist die Steuereinrichtung 3 gemäß der zweiten Betriebsart eingerichtet, innerhalb der Latenzzeit nach Betätigung des Batterietrennschalters 1, während der die Ventilanordnung 30a noch elektrisch ansteuerbar ist, eine Teilbremsung einzuleiten, bei der sich eine volle Bremswirkung der elektrischen Feststellbremse verzögert einstellt. Hierbei wird das 3/2-Wegeventil 18a von der Steuereinrichtung 3 über die Leitungen 15 in die Durchlassstellung geschaltet, so dass die Ausgangsdruckluftleitung 19 - aufgrund des Drosselventils 8 - verzögert mit dem Druck der Leitung 17 beaufschlagt wird.

Es wurde vorstehend bereits erwähnt, dass die Ausgangsdruckluftleitung 19 im belüfteten Zustand ein Relais-Steuerventil pneumatisch so schaltet, dass über das Relais-Steuerventil das interne Relaisventil der Ventilanordnung 34 in die Entlüftungsstellung geschaltet wird, in der der wenigstens eine Bremszylinder 7 über den Entlüftungsausgang des Relaisventils in die Umgebung entlüftet wird. Da sich der Druck aufgrund des Drosselventils 8 verzögert, d. h. im Vergleich zu einer Schaltung ohne Drosselventil langsamer, aufbaut, erfolgt die pneumatische Betätigung des Relais-Steuerventils sowie die pneumatische Schaltung des Relaisventils in die Entlüftungsstellung ebenfalls verzögert, d. h. schrittweise bzw. langsamer als ohne Drosselventil. Dadurch baut sich der Druck in dem wenigstens einem Federspeicherbremszylinder verzögert bzw. langsamer ab als in der ersten Betriebsart, so dass eine Teilbremsung eingeleitet wird.

Gemäß dieser Ausgestaltungsform 30 wird somit eine herkömmliche bekannte elektropneumatisch steuerbare Ventilanordnung dahingehend erweitert, dass die Entlüftung und Belüftung des wenigstens einen Federspeicherbremszylinders 7 sowohl bei nicht betätigtem Not-Aus-Trennschalter 1 bzw. in der ersten Betriebsart als auch bei betätigtem Not-Aus-Trennschalter bzw. in der zweiten Betriebsart über das herkömmliche Relaisventil (nicht gezeigt) der Ventilanordnung erfolgen kann.

Gemäß der Ausführungsvariante ist die Erweiterung der herkömmlichen Ventilanordnung 34 bestehend aus dem Drosselventil 8, dem 3/2-Wegeventil 18a, 18b, den Druckluftleitungen 16, 17,19 sowie den elektrischen Leitungen 15 mit der herkömmlichen Ventilanordnung 34 in eine bauliche Einheit integriert und von einem Gehäuse 34a umhaust.

Figur 4 illustriert schematisch mit einem Blockschaltbild ein viertes Ausführungsbeispiel 40 der vorliegenden Erfindung. Hierbei entsprechen Komponenten mit gleichen Bezugszeichen den Komponenten der Figur 3 und werden nicht gesondert beschrieben.

Die Besonderheit dieses Ausführungsbeispiels im Vergleich zu dem zuvor beschriebenen Ausführungsbeispiel liegt darin, dass anstatt des in Figur 3 dargestellten magnetischen bistabilen 3/2-Wegeventils 18a ein magnetisches 3/2-Wegeventil 18b mit Federrückstellung und pneumatischem Selbsthalteeffekt vorgesehen ist. Der Luftdruck zur Ausübung einer Rückhaltekraft auf die Feder wird mittels der Druckluftleitung 16 aufgebaut. Bis auf die unterschiedliche Ausgestaltung des 3/2-Wegenventils 18b entspricht die Ausgestaltung der Ventilanordnung 40a der Ventilanordnung 30a der Figur 3. Insbesondere entspricht die Funktionsweise in der ersten und zweiten Betriebsart derjenigen des in Figur 3 beschriebenen Ausführungsbeispiels.

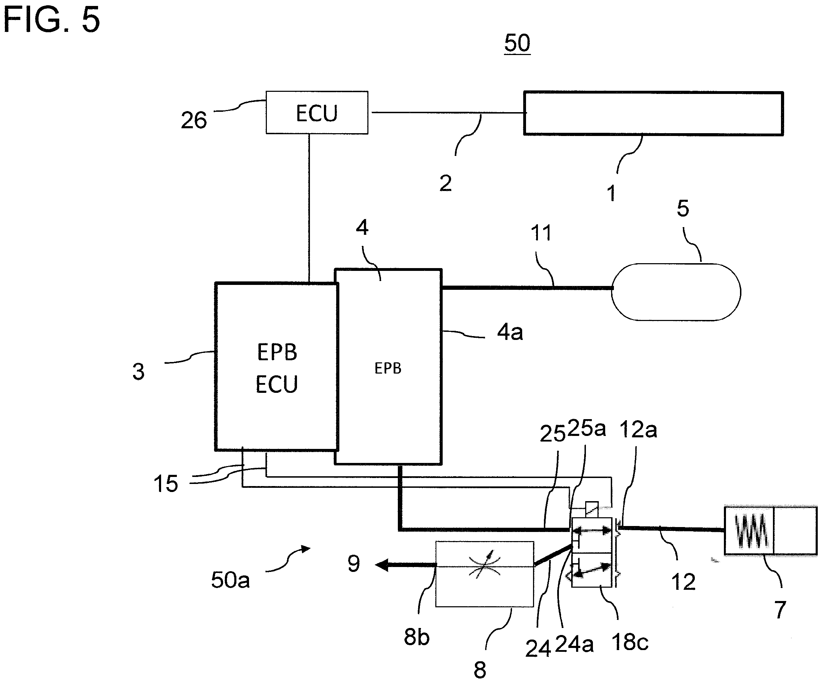

Figur 5 illustriert schematisch mit einem Blockschaltbild ein fünftes Ausführungsbeispiel 50 der vorliegenden Erfindung. Hierbei entsprechen Komponenten mit gleichen Bezugszeichen den Komponenten der Figur 1 und werden nicht gesondert beschrieben.

Die Besonderheit dieses Ausführungsbeispiels im Vergleich zu dem in Figur 1 beschriebenen Ausführungsbeispiel liegt unter anderem darin, dass anstatt des in Figur 1 dargestellten magnetischen bi-stabilen 2/2-Wegeventils ein magnetisches 3/2-Wegeventil (18c) verwendet wird.

Das 3/2-Wegeventil hat einen ersten Anschluss 24a, der über die Druckluftleitung mit dem Drosselventil 8 verbunden ist. Über das Drosselventil ist der Anschluss 24a somit gedrosselt mit der Umgebungsluft verbunden. Das 3/2-Wegeventil 18c verfügt über einen zweiten Anschluss 25a, der mit einer herkömmlichen Ventilanordnung 4 der Feststellbremsventilanordnung über eine Druckluftleitung 25 verbunden ist, und über einen dritten Anschluss 12a, der mit dem wenigstens einen Federspeicherbremszylinder 7 über eine Druckluftleitung 12 verbunden ist.

Das 3/2-Wegeventil 18c ist bei nicht betätigtem Not-Aus-Trennschalter 1 von der Steuereinheit 3 in einer ersten Durchlassstellung geschaltet, in der der zweite 25a und der dritte 12a Anschluss verbunden sind. In dieser Stellung erfolgt das Belüften und Entlüften des Federspeicherbremszylinders 7 in gewohnter Weise über die herkömmliche Ventilanordnung 4.

Bei betätigtem Not-Aus-Trennschalter 1 wird das 3/2-Wegeventil von der Steuereinheit 3 der elektropneumatischen Ventilanordnung 4 über die elektrischen Steuerleitungen 15 in eine zweiten Durchlassstellung geschaltet, in der der erste 24a und der dritte 12a Anschluss verbunden sind. In dieser Stellung wird der Federspeicherbremszylinder 7 somit über das 3/2-Wegeventil 18c und das Drosselventil 8 gedrosselt entlüftet.

Die Steuereinheit 3 der elektropneumatischen Ventilanordnung 4 ist wiederum eingerichtet, zu erfassen, ob der Not-Aus-Trennschalter 1 betätigt wurde. Ein weiterer Unterschied ist zu dem Ausführungsbeispiel der Figur 1 ist, dass die Steuereinheit 3 der elektropneumatischen Ventilanordnung 4 jedoch nicht direkt ein Betätigungssignal von dem Not-Aus-Trennschalter 1 empfängt. Stattdessen ist ein weiteres Steuergerät 26 vorgesehen ist, das direkt über elektrische Leitungen mit dem Not-Aus-Trennschalter 1 verbunden ist, und welches erfasst, ob der Not-Aus-Trennschalter betätigt wird. In diesem Fall gibt das Steuergerät 26 diese Information über eine Signalleitung an die Steuereinheit 3 der elektropneumatischen Ventilanordnung 4 weiter.

Es wird betont, dass eine derartige mittelbare Kopplung der Steuereinheit 3 der elektropneumatischen Ventilanordnung 4 mit dem Not-Aus-Trennschalter ebenfalls für die anderen zuvor beschriebenen Ausführungsvarianten möglich ist.

Obwohl die Erfindung unter Bezugnahme auf bestimmte Ausführungsbeispiele beschrieben worden ist, ist eine Vielzahl von Varianten und Abwandlungen möglich, die ebenfalls von dem Erfindungsgedanken Gebrauch machen und deshalb in den Schutzbereich fallen. Folglich soll die Erfindung nicht auf die offenbarten bestimmten Ausführungsbeispiele begrenzt sein, sondern die Erfindung soll alle Ausführungsbeispiele umfassen, die in den Bereich der beigefügten Patentansprüche fallen.

### Bezugszeichenliste

- 1: Not-Aus-Trennschalter
- 2: Elektrische Leitung
- 3: Steuereinrichtung einer elektropneumatischen Feststellbremsventilanordnung
- 4, 34: Herkömmliche elektropneumatische Feststellbremsventilanordnung
- 5: Druckluftvorrat
- 6a: Bistabiles 2/2-Wegeventil
- 6b: 2/2-Wegeventil mit Federrückstellung
- 7: Federspeicherbremszylinder
- 8: Drosselventil
- 8a: Eingang Drosselventil
- 8b: Ausgang Drosselventil
- 9: Drucksenke, z. B. Umgebungsluft
- 10, 20, 30, 40, 50: Feststellbremsvorrichtung
- 10a, 20a, 30a, 40a, 50a: Elektropneumatische Feststellbremsventilanordnung
- 11-14, 16, 17, 19, 22, 24, 25: Druckluftleitung
- 12a, 24a, 25a: Anschlüsse des 3/2-Wegeventils 18c
- 15: Elektrische Steuerleitung
- 18a: Bistabiles 3/2-Wegeventil
- 18b: 3/2-Wegeventil mit Federrückstellung
- 18c: 3/2-Wegeventil
- 23: Entlüftungsausgang
- 26: Steuereinheit

## Patentansprüche

1. Elektrische Feststellbremsvorrichtung (10; 20; 30; 40; 50) für ein Fahrzeug, insbesondere für ein Nutzfahrzeug, umfassend
eine Aktoreinrichtung, die ausgebildet ist, mechanische Bauteile einer Radbremseinrichtung zu betätigen; und
eine Steuereinrichtung (3), die die Aktoreinrichtung elektrisch ansteuert;
**dadurch gekennzeichnet, dass** die Steuereinrichtung (3) eingerichtet ist, zu erfassen, ob ein Not-Aus-Trennschalter (1) betätigt wurde und, falls der Not-Aus-Trennschalter (1) betätigt wurde, innerhalb einer Latenzzeit nach Betätigung des Not-Aus-Trennschalters (1), während der die Aktoreinrichtung noch elektrisch ansteuerbar ist, mittels der Aktoreinrichtung eine Teilbremsung einzuleiten, derart, dass sich eine volle Bremswirkung der elektrischen Feststellbremse verzögert einstellt.

2. Elektrische Feststellbremsvorrichtung (10; 20; 30; 40; 50) nach Anspruch 1, **dadurch gekennzeichnet, dass** die Aktoreinrichtung wenigstens einen Federspeicherbremszylinder (7) und eine elektropneumatisch steuerbare Feststellbremsventilanordnung (10a; 20a; 30a; 40a: 50a) umfasst, wobei der wenigstens eine Federspeicherbremszylinder (7) über eine Versorgungsleitung (11, 12) und die Feststellbremsventilanordnung (10a; 20a; 30a; 40a; 50a) mit einer Druckmittelquelle (5) verbindbar ist, im gelösten Zustand der Feststellbremsvorrichtung mit Druck der Druckmittelquelle (5) über die Feststellbremsventilanordnung (10a; 20a; 30a; 40a; 50a) beaufschlagt ist und im eingelegten Zustand der Feststellbremsvorrichtung über die Feststellbremsventilanordnung (10a; 20a; 30a; 40a; 50a) mit einer Drucksenke verbindbar ist;
wobei die Feststellbremsventilanordnung (10a; 20a; 30a; 40a; 50a) dazu ausgelegt ist, zum Einleiten der Teilbremsung den wenigstens einen Federspeicherbremszylinder (7) so mit der Drucksenke zu verbinden, dass sich der Druck des Druckmittels im Federspeicherbremszylinder (7) verzögert abbaut.

3. Elektrische Feststellbremsvorrichtung nach Anspruch 2, **dadurch gekennzeichnet, dass** die elektropneumatisch steuerbare Feststellbremsventilanordnung (10a; 20a; 30a; 40a; 50a) dazu ausgelegt ist, in einer ersten Betriebsart den wenigstens einen Federspeicherbremszylinder (7) so mit der Drucksenke zu verbinden, dass sich der Druck des Druckmittels im Federspeicherbremszylinder (7) unverzögert abbaut, und in einer zweiten Betriebsart den wenigstens einen Federspeicherbremszylinder (7) so mit der Drucksenke zu verbinden, dass sich der Druck des Druckmittels im Federspeicherbremszylinder (7) verzögert abbaut, wobei die Steuereinrichtung (3) eingerichtet ist, die Feststellbremsventilanordnung (10a; 20a; 30a; 40a; 50a) zum Einlegen des eingelegten Zustands des wenigstens einen Federspeicherbremszylinders (7) in der ersten Betriebsart anzusteuern, falls der Not-Aus-Trennschalter (1) nicht betätigt wurde, und in der zweiten Betriebsart anzusteuern, falls der Not-Aus-Trennschalter (1) betätigt wurde.

4. Elektrische Feststellbremsvorrichtung nach Anspruch 2 oder 3, **dadurch gekennzeichnet, dass** die Feststellbremsventilanordnung (10a; 20a; 30a; 40a; 50a) so ausgeführt ist, dass das Druckmittel aus dem wenigstens einen Federspeicherbremszylinder (7) beim Einleiten der Teilbremsung gedrosselt entweichen kann.

5. Elektrische Feststellbremsvorrichtung nach einem der Ansprüche 3 oder 4, **dadurch gekennzeichnet, dass** die Feststellbremsventilanordnung (10a; 20a; 30a; 40a; 50a) ein Relaisventil mit einem Steuereingang, einem Arbeitseingang, einem mit dem wenigstens einen Federspeicherbremszylinder (7) verbundenen Arbeitsausgang und einem Entlüftungsausgang umfasst, wobei zum Entlüften des wenigstens einen Federspeicherbremszylinders (7) das Relaisventil durch Steuerung über den pneumatischen Steuereingang in eine Entlüftungsstellung bringbar ist, in der der Arbeitsausgang mit dem Entlüftungsausgang verbunden ist.

6. Elektrische Feststellbremsvorrichtung (10; 20) nach einem der Ansprüche 3 bis 5, **dadurch gekennzeichnet, dass** die Feststellbremsventilanordnung ein Drosselventil (8) umfasst, das ausgangsseitig mit der Drucksenke (9) verbunden ist und eingangsseitig über ein von der Steuereinrichtung (3) elektrisch schaltbares Steuerventil (6a; 6b) mit dem wenigstens einen Federspeicherbremszylinder (7) verbindbar ist, wobei das Steuerventil (6a; 6b) bei nicht betätigtem Not-Aus-Trennschalter (1) geschlossen ist und bei betätigtem Not-Aus-Trennschalter (1) auf Durchlass geschaltet ist.

7. Elektrische Feststellbremsvorrichtung (10; 20) nach Anspruch 6, wenn abhängig von Anspruch 5, **dadurch gekennzeichnet, dass** das Entlüften des wenigstens einen Federspeicherbremszylinders (7) bei nicht betätigtem Not-Aus-Trennschalter (1) über das Relaisventil in der Entlüftungsstellung erfolgt und bei betätigtem Not-Aus-Trennschalter (1) über das Steuerventil (6a; 6b) und das Drosselventil (8) erfolgt.

8. Elektrische Feststellbremsvorrichtung (10; 20) nach einem der Ansprüche 6 oder 7, **dadurch gekennzeichnet,**
(a) **dass** das Steuerventil (6a; 6b) ein 2/2-Wegeventil ist; und/oder
(b) **dass** das Steuerventil ein bistabiles magnetisches 2/2-Wegeventil (6a) oder ein magnetisches 2/2-Wegeventil (6b) mit Federrückstellung und pneumatischem Selbsthalteeffekt ist.

9. Elektrische Feststellbremsvorrichtung (50) nach einem der Ansprüche 3 bis 5, **dadurch gekennzeichnet, dass** die Feststellbremsventilanordnung (50a) ein Drosselventil (8) und ein 3/2-Wegeventil (18c) umfasst, wobei das 3/2-Wegeventil (18c) einen ersten Anschluss (24a), der über das Drosselventil (8) mit der Drucksenke (9) verbunden ist, einen zweiten Anschluss (25a), der mit einer Ventilanordnung der Feststellbremsventilanordnung verbunden ist, und einen dritten Anschluss (12a), der mit dem wenigstens einen Federspeicherbremszylinder (7) verbunden ist, aufweist, wobei das 3/2-Wegeventil (18c) bei nicht betätigtem Not-Aus-Trennschalter (1) in einer Durchlassstellung ist, in der der zweite (25a) und der dritte (12a) Anschluss verbunden sind, und bei betätigtem Not-Aus-Trennschalter (1) von der Steuereinrichtung in eine Durchlassstellung geschaltet ist, in der der erste (24a) und der dritte (12a) Anschluss verbunden sind.

10. Elektrische Feststellbremsvorrichtung (30; 40) nach Anspruch 5, **dadurch gekennzeichnet, dass** die Feststellbremsventilanordnung ein Drosselventil (8) umfasst, das eingangsseitig mit einer Eingangsdruckluftleitung (17) verbunden ist, die im belüfteten Zustand des wenigstens einen Federspeicherbremszylinders (7) belüftet ist, und das ausgangsseitig über ein elektrisch schaltbares Steuerventil (18a; 18b) und eine Ausgangsdruckluftleitung (19) mit dem Steuereingang des Relaisventils mittelbar oder unmittelbar pneumatisch koppelbar ist, wobei das Steuerventil (18a; 18b) bei nicht betätigtem Not-Aus-Trennschalter (1) die Eingangsdruckluftleitung (17) sperrt und bei betätigtem Not-Aus-Trennschalter (1) von der Steuereinrichtung (3) auf Durchlass geschaltet ist, so dass das Relaisventils verzögert in eine Entlüftungsstellung geschaltet wird.

11. Elektrische Feststellbremsvorrichtung nach Anspruch 10, **dadurch gekennzeichnet, dass** das Steuerventil ein elektromagnetisch betätigbares 3/2-Wegeventil (18a; 18b) ist, das in der Sperrschaltung, in der die Eingangsdruckluftleitung (17) gesperrt ist, die Ausgangsdruckluftleitung (19) mit einem Entlüftungsausgang (23) des 3/2-Wegeventils (18a; 18b) verbindet und in der Durchlassschaltung die Eingangsdruckluftleitung (17) über das Drosselventil (8) mit der Ausgangsdruckluftleitung (19) verbindet.

12. Elektrische Feststellbremsvorrichtung nach Anspruch 11, **dadurch gekennzeichnet, dass** das 3/2-Wegeventil ein bistabiles 3/2-Wegeventil (18a) oder ein 3/2-Wegeventil (18b) mit Federrückstellung und pneumatischem Selbsthalteeffekt ist.

13. Elektrische Feststellbremsvorrichtung nach einem der vorhergehenden Ansprüche 4 bis 12, **dadurch gekennzeichnet, dass** eine Stärke der Drosselung, vorzugsweise eine Stärke der Drosselung des Drosselventils (8), einstellbar ist.

14. Elektrische Feststellbremsvorrichtung für ein Fahrzeug, umfassend
eine Aktoreinrichtung, die ausgebildet ist, mechanische Bauteile einer Radbremseinrichtung zu betätigen; und
eine Steuereinrichtung, die die Aktoreinrichtung elektrisch ansteuert;
**dadurch gekennzeichnet, dass** die Steuereinrichtung eingerichtet ist, zu erfassen, ob ein Not-Aus-Trennschalter betätigt wurde und zu ermitteln, ob eine Fahrgeschwindigkeit des Fahrzeugs kleiner als ein vorbestimmter Schwellwert ist, und
wobei die Steuereinrichtung ferner eingerichtet ist,
a) falls die ermittelte Fahrgeschwindigkeit größer gleich als der Schwellwert ist, bei Betätigung des Not-Aus-Trennschalters, innerhalb einer Latenzzeit nach Betätigung des Not-Aus-Trennschalters, während der die Aktoreinrichtung noch elektrisch ansteuerbar ist, mittels der Aktoreinrichtung eine Teilbremsung einzuleiten, derart, dass sich eine volle Bremswirkung der elektrischen Feststellbremse verzögert einstellt.
(b) falls die ermittelte Fahrgeschwindigkeit kleiner als der Schwellwert ist, bei Betätigung des Not-Aus-Trennschalters oder eines Batterietrennschalters ein vollständiges Einlegen der Feststellbremse statt einer Teilbremsung über die Aktoreinrichtung einzuleiten oder, falls bereits eine Teilbremsung eingeleitet wurde, die Aktoreinrichtung so anzusteuern, dass diese die mechanischen Teile der Radbremseinrichtung unverzögert mit der vollen Bremskraft beaufschlagt.

15. Fahrzeug, insbesondere Nutzfahrzeug, mit einer elektrischen Feststellbremsvorrichtung nach einem der vorhergehenden Ansprüche.

## Claims

1. Electric parking brake (10; 20; 30; 40; 50) for a vehicle, in particular for a utility vehicle, comprising
an actuator device which is designed to activate mechanical components of a wheel brake device; and a control device (3) which electrically actuates the actuator device;
**characterized in that** the control device (3) is configured to detect whether an emergency off isolator switch (1) has been activated, and is the emergency off isolator switch (1) has been activated, to initiate within a latency period after the activation of the emergency off isolator switch (1), during which the actuator device can still be electrically actuated, a partial braking operation by means of the actuator device in such a way that a full braking operation of the electric parking brake occurs in a delayed fashion.

2. Electric parking brake device (10;; 20; 30; 40; 50) according to Claim 1, **characterized in that** the actuator device comprises at least one spring-loaded brake cylinder (7) and one electropneumatically controllable parking brake valve arrangement (10a; 20a; 30a; 40a; 50a), wherein the at least one spring-loaded brake cylinder (7) can be connected to a pressure median source (5) via a supply line (11, 12) and the parking brake valve arrangement (10a; 20a; 30a; 40a; 50a), in the released state of the parking brake device pressure from the pressure median source (5) can be applied to said spring-loaded brake cylinder (7) by means of the parking brake valve arrangement (10a; 20a; 30a; 40a; 50a), and in the applied state of the parking brake device said spring-loaded brake cylinder (7) can be connected to a pressure sink via the parking brake valve arrangement (10a; 20a; 30a; 40a; 50a); wherein the parking brake valve arrangement (10a; 20a; 30a; 40a; 50a) is configured, for the purpose of initiating the partial braking, to connect the at least one spring-loaded brake cylinder (7) to the pressure sink in such a way that the pressure of the pressure median in the spring-loaded brake cylinder (7) decreases in a delayed fashion.

3. Electric parking brake device according to Claim 2, **characterized in that** the electropneumatically controllable parking brake valve arrangement (10a; 20a; 30a; 40a; 50a) is configured to connect the at least one spring-loaded brake cylinder (7) to the pressure sink in a first operating mode in such a way that the pressure of the pressure median in the spring-loaded brake cylinder (7) decreases without a delay, and to connect the at least one spring-loaded brake cylinder (7) to the pressure sink in a second operating mode in such a way that the pressure of the pressure median in the spring-loaded brake cylinder (7) decreases in a delayed fashion, wherein the control device (13) is configured to actuate the parking brake valve arrangement (10a; 20a; 30a; 40a; 50a), for the purpose of engaging the engaged state of the at least one spring-loaded brake cylinder (7), in the first operating mode if the emergency off isolator switch (1) has not been activated, and to actuate said spring-loaded brake cylinder (7) in the second operating mode if the emergency off isolator switch (1) has been activated.

4. Electric parking brake device according to Claim 2 or 3, **characterized in that** the parking brake valve arrangement (10a; 20a; 30a; 40a; 50a) is embodied in such a way that the pressure median can escape in a throttled fashion from the at least one spring-loaded brake cylinder (7) when the partial braking operation is initiated.

5. Electric parking brake device according to one of Claims 3 or 4, **characterized in that** the parking brake valve arrangement (10a; 20a; 30a; 40a; 50a) comprises a relay valve with a control inlet, a working inlet, a working outlet which is connected to the at least one spring-loaded brake cylinder (7), and a venting outlet, wherein in order to vent the at least one spring-loaded brake cylinder (7) the relay can be moved, through control via the pneumatic control inlet, into a venting position in which the working outlet is connected to the venting outlet.

6. Electric parking brake device (10; 20) according to one of Claims 3 to 5, **characterized in that** the parking brake valve arrangement comprises a throttle valve (8) which is connected on the outlet side to the pressure sink (9) and can be connected on the inlet side to the at least one spring-loaded brake cylinder (7) via control valve (6a; 6b) which can be switched electrically via the control device (3), wherein the control valve (6a; 6b) is closed when the emergency off isolator switch (1) is not activated and is switched to the open position when the emergency off isolator switch (1) is activated.

7. Electric parking brake device (10; 20) according to Claim 6, if dependent on Claim 5, **characterized in that** the venting of the at least one spring-loaded brake cylinder (7) when the emergency off isolator switch (1) is not activated takes place via the relay valve in the venting position, and when the emergency off isolator switch (1) is activated it takes place via the control valve (6a; 6b) and the throttle valve (8).

8. Electric parking brake device (10; 20) according to one of Claims 6 or 7, **characterized**
(a) **in that** the control valve (6a; 6b) is a 2/2 way valve and/or
(b) **in that** the control valve is a bistable magnetic 2/2 way valve (6a) or a magnetic 2/2 way valve (6b) with spring resetting and a pneumatic self-holding effect.

9. Electric parking brake device (50) according to one of Claims 3 to 5, **characterized in that** the parking brake valve arrangement (50a) comprises a throttle valve (8) and a 3/2-way valve (18c), wherein the 3/2-way valve (18c) has a first connection (24a), which is connected to the pressure sink (9) via the throttle valve (8), a second connection (25a), which is connected to a valve arrangement of the parking brake valve arrangement, and a third connection (12a), which is connected to the at least one spring-loaded brake cylinder (7), wherein when the emergency off isolator switch (1) is not activated the 3/2-way valve (18c) is in an open position in which the second connection (25a) and the third connection (12a) are connected, and when the emergency off isolator switch (1) is not activated said 3/2-way valve (18c) is switched by the control device into an open position in which the first connection (24a) and the third connection (12a) are connected.

10. Electric parking brake device (30; 40) according to Claim 5, **characterized in that** the parking brake valve arrangement comprises a throttle valve (8) which is connected on the inlet side to an inlet pressure air line (17) which is ventilated in the ventilated state of the at least one spring-loaded brake cylinder (7), and which throttle valve (8) can be indirectly or directly coupled pneumatically on the outlet side to the control inlet of the relay valve via an electrically switchable control valve (18a; 18b) and an outlet compressed air line (19), wherein when the emergency off isolator switch (1) is not activated the control valve (18a; 18b) shuts off the inlet pressure air line (17), and when the emergency off isolator switch (1) is activated said control valve (18a; 18b) is switched to the open position by the control device (3) so that the relay valve is switched in a delayed fashion into a venting position.

11. Electric parking brake device according to Claim 10, **characterized in that** the control valve connects a 3/2-way valve (18a; 18b) which can be activated electromagnetically and which, in the shut-off position in which the inlet pressure air line ((17) is shut off, connects the outlet pressure air line (19) to a venting outlet (23) of the 3/2-way valve (18a; 18b), and in the open position connects the inlet pressure air line (17) to the outlet pressure air line (19) via the throttle valve (8).

12. Electric parking brake device according to Claim 11, **characterized in that** the 3/2-way valve is a bistable 3/2-way valve (18a) or a 3/2-way valve (18b) with spring reset and pneumatic self-holding effect.

13. Electric parking brake device according to one of the preceding Claims 4 to 12, **characterized in that** the strength of the throttling, preferably a strength of the throttling of the throttle valve (8), is adjustable.

14. Electric parking brake device for a vehicle, comprising an actuator device which is designed to activate mechanical components of a wheel brake device; and
a control device which electrically actuates the actuator device;
**characterized in that** the control device is configured to sense whether an emergency off isolator switch has been activated and to determine whether a velocity of the vehicle is lower than a predetermined threshold value, and
wherein the control device is also configured
a) to initiate a partial braking operation if the determined velocity is higher than or equal to the threshold value when the emergency off isolator switch is activated, within a latency time after the activation of the emergency off isolator switch during which the actuator device can still be actuated electrically, said control device initiating said partial braking operation by means of actuator device in such a way that a full braking effect of the electric parking brake occurs in a delayed fashion.
b) to initiate complete engagement of the parking brake instead of a partial braking operation by means of the actuator device if the determined velocity is lower than the threshold value when the emergency off isolator switch or a battery isolator switch is activated, or
if a partial braking operation has already been initiated, to actuate the actuator device in such a way that it applies the full braking force to mechanical parts of the wheel brake device without a delay.

15. Vehicle, in particular a utility vehicle, having an electric parking brake device according to one of the preceding claims.

## Revendications

1. Arrangement de frein de stationnement électrique (10 ; 20 ; 30 ; 40 ; 50) pour un véhicule, notamment pour un véhicule utilitaire, comprenant
un dispositif actionneur, qui est configuré pour actionner des composants mécaniques d'un dispositif de frein de roue ; et
un dispositif de commande (3) qui commande électriquement le dispositif actionneur ;
**caractérisé en ce que** le dispositif de commande (3) est conçu pour détecter si un sectionneur d'arrêt d'urgence (1) a été actionné et, dans le cas où le sectionneur d'arrêt d'urgence (1) a été actionné, initier un freinage partiel au moyen du dispositif actionneur au sein d'un temps de latence après l'actionnement du sectionneur d'arrêt d'urgence (1), durant lequel le dispositif actionneur peut encore être commandé électriquement, de sorte qu'un effet de freinage complet du frein de stationnement électrique s'établisse de manière retardée.

2. Arrangement de frein de stationnement électrique (10 ; 20 ; 30 ; 40 ; 50) selon la revendication 1, **caractérisé en ce que** le dispositif actionneur comporte au moins un cylindre de frein à accumulation (7) et un arrangement de vannes de frein de stationnement (10a ; 20a ; 30a ; 40a ; 50a) qui peut être commandé de façon électropneumatique, l'au moins un cylindre de frein à accumulation (7) pouvant être relié à une source de fluide sous pression (5) par le biais d'une conduite d'alimentation (11, 12) et de l'arrangement de vannes de frein de stationnement (10a ; 20a ; 30a ; 40a ; 50a), à l'état desserré l'arrangement de frein de stationnement est soumis à la pression de la source de fluide sous pression (5) par le biais de l'arrangement de vannes de frein de stationnement (10a ; 20a ; 30a ; 40a ; 50a) et à l'état engagé l'arrangement de frein de stationnement peut être relié à un collecteur de pression par le biais de l'arrangement de vannes de frein de stationnement (10a ; 20a ; 30a ; 40a ; 50a) ;
l'arrangement de vannes de frein de stationnement (10a ; 20a ; 30a ; 40a ; 50a) étant conçu pour, en vue d'initier le freinage partiel, relier l'au moins un cylindre de frein à accumulation (7) au collecteur de pression de telle sorte que la pression du fluide sous pression se réduise de manière retardée dans le cylindre de frein à accumulation (7).

3. Arrangement de frein de stationnement électrique selon la revendication 2, **caractérisé en ce que** l'arrangement de vannes de frein de stationnement (10a ; 20a ; 30a ; 40a ; 50a) qui peut être commandé de façon électropneumatique est conçu pour, dans un premier mode de fonctionnement, relier l'au moins un cylindre de frein à accumulation (7) au collecteur de pression de telle sorte que la pression du fluide sous pression se réduise de manière non retardée dans le cylindre de frein à accumulation (7) et, dans un deuxième mode de fonctionnement, relier l'au moins un cylindre de frein à accumulation (7) au collecteur de pression de telle sorte que la pression du fluide sous pression se réduise de manière retardée dans le cylindre de frein à accumulation (7), le dispositif de commande (3) étant conçu pour commander l'arrangement de vannes de frein de stationnement (10a ; 20a ; 30a ; 40a ; 50a) dans le premier mode de fonctionnement en vue d'engager l'état engagé de l'au moins un cylindre de frein à accumulation (7) dans le cas où le sectionneur d'arrêt d'urgence (1) n'a pas été actionné, et le commander dans le deuxième mode de fonctionnement dans le cas où le sectionneur d'arrêt d'urgence (1) a été actionné.

4. Arrangement de frein de stationnement électrique selon la revendication 2 ou 3, **caractérisé en ce que** l'arrangement de vannes de frein de stationnement (10a ; 20a ; 30a ; 40a ; 50a) est réalisé de telle sorte que le fluide sous pression peut s'échapper à un débit réduit de l'au moins un cylindre de frein à accumulation (7) lors de l'initiation du freinage partiel.

5. Arrangement de frein de stationnement électrique selon l'une des revendications 3 ou 4, **caractérisé en ce que** l'arrangement de vannes de frein de stationnement (10a ; 20a ; 30a ; 40a ; 50a) comporte une vanne relais comprenant une entrée de commande, une entrée de travail une sortie de travail reliée à l'au moins un cylindre de frein à accumulation (7) et une sortie de purge d'air, la vanne relais, en vue de purger l'air de l'au moins un cylindre de frein à accumulation (7), pouvant être amenée par commande de l'entrée de commande pneumatique dans une position de purge d'air dans laquelle la sortie de travail est reliée à la sortie de purge d'air.

6. Arrangement de frein de stationnement électrique (10 ; 20) selon l'une des revendications 3 à 5, **caractérisé en ce que** l'arrangement de vannes de frein de stationnement comporte une vanne d'étranglement (8) dont la sortie est reliée au collecteur de pression (9) et dont l'entrée peut être reliée à l'au moins un cylindre de frein à accumulation (7) par le biais d'une vanne de commande (6a ; 6b) pouvant être commutée électriquement par le dispositif de commande (3), la vanne de commande (6a ; 6b) étant fermée lorsque le sectionneur d'arrêt d'urgence (1) n'est pas actionné et étant commutée en passage lorsque le sectionneur d'arrêt d'urgence (1) est actionné.

7. Arrangement de frein de stationnement électrique (10 ; 20) selon la revendication 6, lorsqu'elle est dépendante de la revendication 5, **caractérisé en ce que** la purge d'air de l'au moins un cylindre de frein à accumulation (7), lorsque le sectionneur d'arrêt d'urgence (1) n'est pas actionné, s'effectue par le biais de la vanne relais dans la position de purge d'air et, lorsque le sectionneur d'arrêt d'urgence (1) est actionné, s'effectue par le biais de la vanne de commande (6a ; 6b) et de la vanne d'étranglement (8).

8. Arrangement de frein de stationnement électrique (10 ; 20) selon l'une des revendications 6 ou 7, **caractérisé en ce que**
(a) la vanne de commande (6a ; 6b) est une vanne de distribution 2/2 ; et/ou
(b) la vanne de commande est une vanne de distribution 2/2 magnétique bistable (6a) ou une vanne de distribution 2/2 magnétique (6b) avec rappel par ressort et effet d'auto-maintien pneumatique.

9. Arrangement de frein de stationnement électrique (50) selon l'une des revendications 6 ou 7, **caractérisé en ce que** l'arrangement de vannes de frein de stationnement (50a) comporte une vanne d'étranglement (8) et une vanne de distribution 3/2 (18c), la vanne de distribution 3/2 (18c) possédant un premier raccord (24a), qui est relié au collecteur de pression (9) par le biais de la vanne d'étranglement (8), un deuxième raccord (25a), qui est relié à un arrangement de vannes de l'arrangement de vannes de frein de stationnement, et un troisième raccord (12a), qui est relié à l'au moins un cylindre de frein à accumulation (7), la vanne de distribution 3/2 (18c), lorsque le sectionneur d'arrêt d'urgence (1) n'est pas actionné, se trouvant dans une position de passage dans laquelle le deuxième (25a) et le troisième (12a) raccord sont reliés et, lorsque le sectionneur d'arrêt d'urgence (1) est actionné, étant commutée par le dispositif de commande dans une position de passage dans laquelle le premier (24a) et le troisième (12a) raccord sont reliés.

10. Arrangement de frein de stationnement électrique (30 ; 40) selon la revendication 5, **caractérisé en ce que** l'arrangement de vannes de frein de stationnement comporte une vanne d'étranglement (8) dont l'entrée est reliée à une conduite d'air comprimé d'entrée (17) qui est aérée dans l'état d'aération de l'au moins un cylindre de frein à accumulation (7), et dont la sortie peut être connectée pneumatiquement directement ou indirectement à l'entrée de commande de la vanne relais par le biais d'une vanne de commande (18a ; 18b) commandable électriquement et d'une conduite d'air comprimé de sortie (19), la vanne de commande (18a ; 18b), lorsque le sectionneur d'arrêt d'urgence (1) n'est pas actionné, fermant la conduite d'air comprimé d'entrée (17) et, lorsque le sectionneur d'arrêt d'urgence (1) est actionné, étant commutée passant par le dispositif de commande (3) de telle sorte que la vanne relais soit commutée de manière retardée dans une position de purge d'air.

11. Arrangement de frein de stationnement électrique (30 ; 40) selon la revendication 10, **caractérisé en ce que** la vanne de commande est une vanne de distribution 3/2 (18a ; 18b) à actionnement électromagnétique qui, dans la position de fermeture dans laquelle la conduite d'air comprimé d'entrée (17) est fermée, relie la conduite d'air comprimé de sortie (19) à une sortie de purge d'air (23) de la vanne de distribution 3/2 (18a ; 18b) et, dans la commutation de passage, relie la conduite d'air comprimé d'entrée (17) à la conduite d'air comprimé de sortie (19) par le biais de la vanne d'étranglement (8).

12. Arrangement de frein de stationnement électrique selon la revendication 11, **caractérisé en ce que** la vanne de distribution 3/2 est une vanne de distribution 3/2 bistable (18a) ou une vanne de distribution 3/2 (18b) avec rappel par ressort et effet d'auto-maintien pneumatique.

13. Arrangement de frein de stationnement électrique selon l'une des revendications précédentes 4 à 12, **caractérisé en ce qu'**une intensité de l'étranglement, de préférence une intensité de l'étranglement de la vanne d'étranglement (8), est réglable.

14. Arrangement de frein de stationnement électrique pour un véhicule, comprenant
un dispositif actionneur, qui est configuré pour actionner des composants mécaniques d'un dispositif de frein de roue ; et
un dispositif de commande qui commande électriquement le dispositif actionneur ;
**caractérisé en ce que** le dispositif de commande est conçu pour détecter si un sectionneur d'arrêt d'urgence a été actionné et pour déterminer si une vitesse de déplacement du véhicule est inférieure à une valeur de seuil prédéterminée, et
le dispositif de commande est en outre conçu pour
a) dans le cas où la vitesse de déplacement déterminée est supérieure à la valeur de seuil, lors de l'actionnement du sectionneur d'arrêt d'urgence, initier un freinage partiel au moyen du dispositif actionneur au sein d'un temps de latence après l'actionnement du sectionneur d'arrêt d'urgence, durant lequel le dispositif actionneur peut encore être commandé électriquement, de sorte qu'un effet de freinage complet du frein de stationnement électrique s'établisse de manière retardée,
b) dans le cas où la vitesse de déplacement déterminée est inférieure à la valeur de seuil, lors de l'actionnement du sectionneur d'arrêt d'urgence ou d'un sectionneur de batterie, initier un engagement complet du frein de stationnement au lieu d'un freinage partiel par le biais du dispositif actionneur ou, dans le cas où un freinage partiel a déjà été initié, commander le dispositif actionneur de telle sorte que celui-ci soumette les parties mécaniques du dispositif de frein de roue sans retard à la pleine force de freinage.

15. Véhicule, notamment véhicule utilitaire, comprenant un arrangement de frein de stationnement électrique selon l'une des revendications précédentes.
